(19) Europäisches Patentamt

European Patent Office

Office européen des brevets

(11) EP 0 775 953 B1

(12) FASCICULE DE BREVET EUROPEEN

(45) Date de publication et mention
de la délivrance du brevet:
01.08.2001 Bulletin 2001/31

(51) Int Cl.⁷: G05D 1/06

(21) Numéro de dépôt: 96402407.9

(22) Date de dépôt: 12.11.1996

(54) **Procédé de pilotage à basse altitude**

Steuermethode im Tiefflug

Method of guidance at a low altitude

(84) Etats contractants désignés:
DE GB

(30) Priorité: 21.11.1995 FR 9513786

(43) Date de publication de la demande:
28.05.1997 Bulletin 1997/22

(73) Titulaire: THALES AVIONICS S.A.
78141 Vélizy Villacoublay Cédex (FR)

(72) Inventeur: Larrieu, Bertrand
94117 Arcueil Cedex (FR)

(74) Mandataire: Guérin, Michel
Thomson-CSF Propriété Intellectuelle,
13, Avenue du Président Salvador Allende
94117 Arcueil Cédex (FR)

(56) Documents cités:
FR-A- 2 607 948        FR-A- 2 658 636

• 1993,INTERNATIONAL CONFERENCE ON
SYSTEMS,MAN AND CYBERNETICS, vol. 1, 17 -
10 Octobre 1993, LE TOUQUET-FRANCE, pages
709-714, XP000462524 WILLIAMS ET AL:
"effects of integrated flight path and terrain
displays on controlled flight into terrain"
• PATENT ABSTRACTS OF JAPAN vol. 8, no. 183
(P-296), 27 Avril 1984 & JP 59 075113 A (NIPPON
DENSO), 27 Avril 1984,
• PATENT ABSTRACTS OF JAPAN vol. 15, no. 224
(P-1212), 20 Mars 1991 & JP 03 064787 A (NISSAN
MOTOR), 20 Mars 1991,

**Description**

Le domaine de l'invention est celui des aéronefs et plus particulièrement celui des avions de transport militaire qui auront besoin pour exécuter efficacement des missions tactiques, de systèmes de vol en basse altitude (typiquement en deçà d'altitudes de 500 ft) permettant ainsi de profiter des masques du relief qu'ils survolent.

Il existe à l'heure actuelle des procédés de vol à basse altitude, calculés en temps réel pour des avions d'armes et notamment un procédé décrit par la demanderesse dans la demande de brevet publiée sous le n° 2 658 636. Néanmoins, ce type de procédé de pilotage d'un aéronef en vol à très basse altitude ne peut pas être transposé au cas des avions de transport militaire qui sont soumis à des contraintes différentes de part leurs caractéristiques en terme de masse, d'inertie, de manoeuvrabilité ou bien encore de vulnérabilité.

De plus, un avion de transport militaire ne peut faire subir au personnel qu'il est susceptible de transporter des changements de trajectoire trop brutaux, des trajectoires de rayons de courbure trop étroits, ou des alternances de piquer-cabrer trop fréquentes.

C'est pourquoi l'invention propose un procédé de pilotage en temps réel, particulièrement bien adapté aux avions de transport militaire et respectant les contraintes qu'imposent ces derniers.

Ce procédé permet au pilote de l'avion de déterminer en temps réel un nouveau plan de vol, lorsqu'une menace se présente rendant nécessaire le changement de plan de vol préembarqué.

Ce procédé repose sur la détermination d'une trajectoire à pentes variables tangentant au maximum un relief à survoler, à partir de données permettant au préalable, l'élaboration d'une trajectoire dans un couloir horizontal défini au niveau du terrain à survoler. Il permet de définir en temps réel une trajectoire optimisée, respectant les contraintes avion, tout en permettant à l'avion de voler au plus bas par rapport à un relief donné.

Le procédé selon l'invention est défini dans la revendication 1 qui a pour objet un procédé de pilotage d'un aéronef en vol à basse altitude qui comprend les étapes suivantes :

- la détermination par le pilote de l'aéronef, de buts $B_i$ sur un écran cartographique, de manière à définir un plan de vol découpé en segments $s_i$, chaque segment $S_i$ étant défini entre un but $B_i$ et un but $B_{i+1}$ ;
- la détermination par un calculateur C dans l'aéronef, de trajectoires horizontales $TH_i$ le long des segments $s_i$ ;
- la détermination du profil de terrain à survoler, par le calculateur C, ledit profil de terrain étant défini à partir d'un ensemble de points les plus hauts $P_{ij}$ situés sur une trajectoire $TH_i$ entre un but $B_i$ et un but $B_{i+1}$ ;

- la détermination d'une série de droites $Z_{io}S'_{i1}$, ... $S'_{ik}S'_{ik+1}$, $S'_{in}Z_{in}$, de pentes $\Lambda_{ik}$ qui tangentent le profil de terrain ;

$Z_{io}$ étant l'altitude de l'aéronef positionné en début de segment
$S'_{i1}$, ... $S'_{ik}$, ... $S'_{in}$ étant des sommets déterminants définis parmi les points $P_{ij}$
$Z_{in}$ étant une altitude de l'aéronef visée au voisinage de la fin du segment
lesdites droites définissant les consignes de vol en trajectoire verticale.

Il est à noter que le résultat du calcul de trajectoires à pentes variables consiste en la détermination d'une série de sommets déterminants $S'_i$, ... $S'_n$ répartis entre les buts $B_i$ et $B_{i+1}$, les pentes des droites reliant deux sommets déterminants étant les pentes $\Lambda_{ik}$.

Pour élaborer ce type de trajectoire, il peut être particulièrement intéressant de procéder de façon itérative en définissant un premier sommet déterminant $S_{i1}$ sur l'ensemble du segment $S_i$, puis lorsque la distance entre le début de segment $S_{i1}$ et/ou la distance entre $S_{i1}$ et la fin du segment sont suffisantes, d'autres sommets déterminants de part et d'autre du premier sommet déterminant et ainsi de proche en proche de redécouper en sous-segments, un sous-segment défini préalablement jusqu'à atteindre une distance minimale de sous-segment.

C'est pourquoi, avantageusement le procédé de pilotage peut procéder successivement à :

- la détermination d'un premier sommet déterminant $S_{i1}$ sur l'ensemble du segment de navigation considéré, donnant une trajectoire de pente $\gamma_{i1}$ ;
- si la distance entre le début du segment et $S_{i1}$ est supérieure à une distance fixée à au moins $2D_{minseg}$, $D_{minseg}$ étant une distance minimale entre deux points de changement de pente et étant définie comme contrainte opérationnelle pour éviter les changements de pente trop fréquents, à la détermination d'un second sommet déterminant $S_{i2}$, fournissant non plus une droite de pente $\gamma_{i1}$ mais deux droites de pentes $\gamma_{i2}$ et $\gamma'_{i2}$, de part et d'autre du point $S_{i2}$ ;
- si la distance entre $S_{i1}$ et la fin de segment est également supérieure à $2D_{minseg}$, à la détermination d'un troisième sommet déterminant $S_{i3}$ et donc à deux trajectoires de pentes $\gamma_{i3}$ et $\gamma'_{i3}$;
- l'itération de la recherche de sommets déterminants dans chaque sous-segment nouvellement défini, jusqu'à atteindre la contrainte sur $2D_{minseg}$.

Selon une première variante de l'invention, le pilote de l'avion peut agir avec une commande manuelle, type "joystick" pour afficher les buts à atteindre sur l'écran cartographique. Selon une seconde variante de l'invention, le pilote de l'avion peut agir sur un écran tactile. Selon une troisième variante, le pilote peut agir par commande vocale.

Les consignes de vol déterminées selon le procédé de l'invention par le calculateur peuvent être présentées au pilote de différentes manières.

Selon une variante de l'invention, l'écran cartograhique peut avantageusement comprendre une fenêtre dans laquelle sont présentées des consignes de vol générales, montrant l'ensemble des droites $(Z_{oi}S'_{i1})$.

Les consignes de vol sont également présentées sous forme ponctuelle sur un viseur tête haute qui affiche régulièrement des consignes de vol à court terme.

L'invention sera mieux comprise et d'autres avantages apparaîtront à la lecture de la description qui va suivre donnée à titre non limitatif et grâce aux figures annexées parmi lesquelles :

- la figure 1 illustre un synoptique d'un dispositif permettant de mettre en oeuvre le procédé proposé dans l'invention ;
- la figure 2 schématise un plan de vol défini dans le plan horizontal avec les buts fixés par le pilote ;
- la figure 3 schématise la coupe de terrain à survoler correspondant à un segment de navigation complété par un talon ;
- la figure 4a illustre un exemple de segment $s_i$ dans lequel le sommet déterminant $S_{i1}$ est très proche de la fin de segment ;
- la figure 4b illustre le même exemple de segment $S_i$ que celui décrit en figure 4a, dans lequel la position du sommet déterminant $S_{i1}$ est modifiée ;
- la figure 5 illustre un exemple de segment $s_i$ long dans lequel on définit successivement plusieurs sommets déterminants.

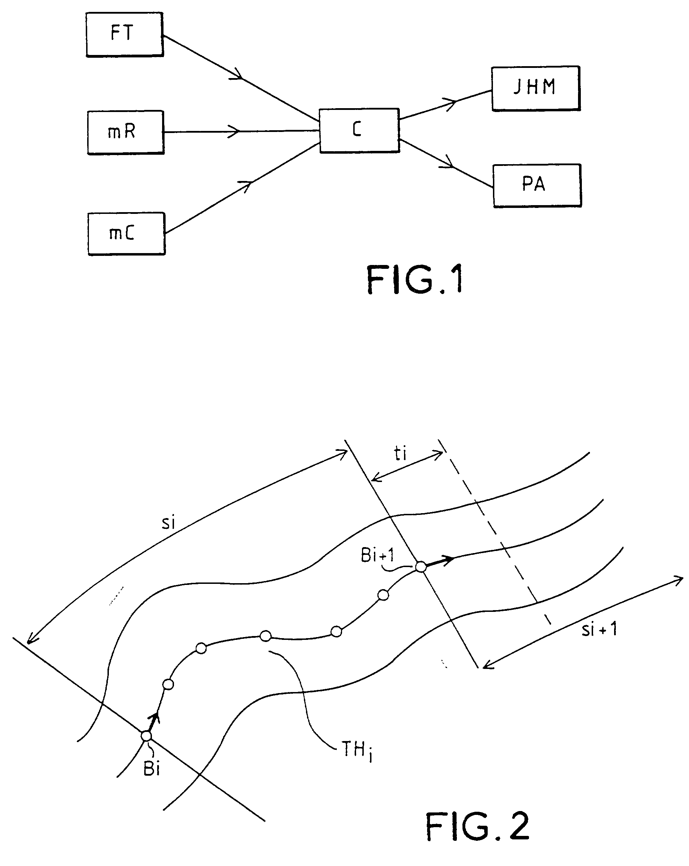

Pour mettre en oeuvre le procédé de pilotage à basse altitude selon l'invention, un synoptique de dispositif est illustré en figure 1.

Le synoptique proposé sur cette figure, montre que le pilote dispose par exemple à bord de son avion d'un fichier de terrain embarqué FT, donnant une matrice en relief avec des altitudes du terrain à survoler, ce fichier de terrain étant complété par des moyens radar air-sol mR permettant d'identifier des obstacles qui n'auraient pas été intégrés au fichier de terrain. L'élaboration d'une carte de terrain encore plus précise peut être obtenue à l'aide de capteurs supplémentaires, par exemple de type radiosonde mC.

Le fichier de terrain peut être présenté au pilote sous forme d'un écran cartographique sur lequel le pilote sélectionne les différents buts $B_i$ en vue de définir un plan de vol en temps réel, tenant compte des obstacles qui se présentent à lui.

Lorsque deux buts $B_i$ et $B_{i+1}$ sont définis et délimitent un segment $S_i$, une trajectoire horizontale $TH_i$ est alors définie grâce à un calculateur de navigation. Des points les plus hauts $P_{ij}$ sont extraits de données altimétriques embarquées.

A partir de ces différentes données, les trajectoires à pente variable sont élaborées dans un calculateur C pour permettre un vol basse altitude destiné à assurer un fonctionnement en automatique ou semi-automatique en directeur de vol.

Dans tous les cas, l'ensemble de la trajectoire de suivi de terrain à pente variable et donc des consignes de pilotage à respecter, est d'une part présentée à l'équipage au travers des moyens classiques d'interface homme/machine au niveau de la planche de bord, et d'autre part envoyée au système de pilotage automatique PA.

La planche de bord est équipée à la fois de l'écran cartographique qui peut comprendre une fenêtre sur laquelle sont représentées les trajectoires calculées qui tangentent le relief et ce sur des distances de plusieurs kilomètres. Un viseur tête haute donne en parallèle des consignes de vol changeant toutes les quelques millisecondes et indiquant précisément au pilote les manoeuvres à effectuer.

De manière plus précise, le procédé de pilotage à basse altitude, objet de la présente invention, consiste à redéfinir le plan de vol préétabli à l'aide du fichier de terrain embarqué, et à découper en segments le nouveau plan de vol de navigation. Chaque segment de navigation $s_i$ est ainsi délimité entre deux buts à atteindre $B_i$ et $B_{i+1}$; les segments sont examinés un par un, suivant l'ordre de parcours du plan de vol. La trajectoire au sol le long des segments de navigation, $s_i$, est connue, ainsi que la coupe du terrain correspondant.

Avantageusement dans le traitement d'un segment on considère plus largement un segment de navigation, $s_i$ en lui intégrant un talon $t_i$ correspondant à une partie du segment consécutif $s_{i+1}$, de manière à assurer une certaine continuité de trajectoire lorsqu'on passe d'un segment à un autre, la recherche de sommets déterminants est donc menée sur un intervalle $(s_i+t_i)$.

Pour le dernier segment à considérer dans le plan de vol, le talon peut correspondre à la continuité du segment, puisqu'aucun segment $s_{i+1}$ n'est alors connu.

La figure 2 illustre la trace $TH_i$ au sol à suivre lors du pilotage de l'avion, défini préalablement à la détermination des trajectoires à pentes variables. Pour tenir compte des erreurs de localisation, un couloir horizontal est défini autour de la trace au sol. Les points $B_i$ et $B_{i+1}$ délimitant des segments de navigation ayant été définis par le pilote.

Le profil de terrain est quant à lui issu du fichier de terrain altimétrique complété éventuellement par une carte radar.

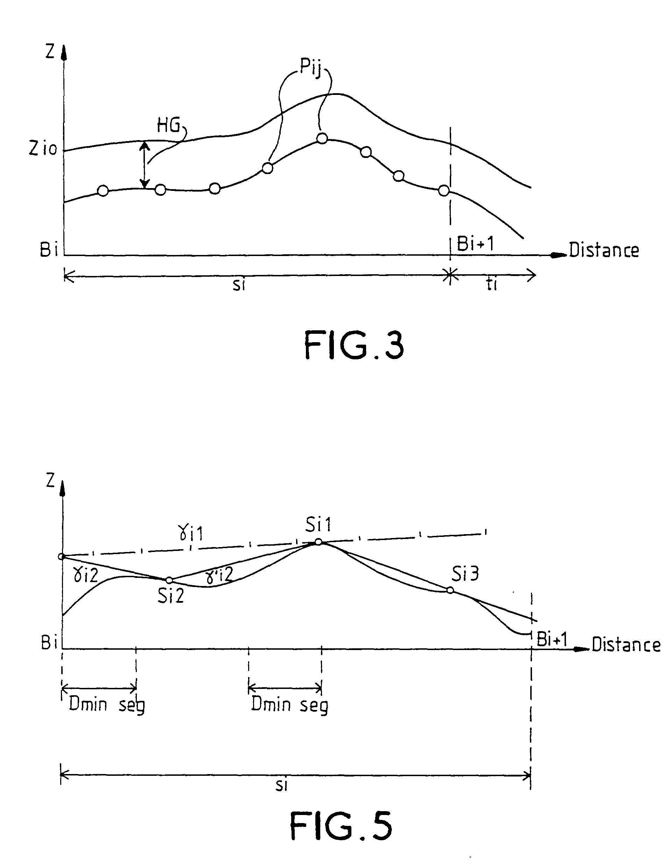

La figure 3 illustre un exemple de profil de terrain à survoler le long d'un segment de navigation $s_i$, complété d'un talon $t_i$.

Les points $P_{ij}$ correspondent à des points de plus haute altitude connue qui rehaussés d'une hauteur de garde HG permettent de définir un profil de garde que le pilote va chercher à survoler au plus près, en tout point.

Dans la recherche du plan de vol et du calcul des trajectoires verticales, certaines contraintes doivent être en permanence respectées. Ces contraintes sont de deux natures : des contraintes opérationnelles et des contraintes dites "avion".

Les contraintes opérationnelles que l'on définit pour tout plan de vol sont :

- une hauteur de garde HG à respecter par rapport au relief ;
- une distance minimale d'un sous-segment $D_{minseg}$, permettant d'éviter des changements de pente trop fréquents ;
- un changement de pente maximum $\Delta\gamma_{max}$ de part et d'autre d'un point de changement de pente ;
- un écart minimum de pente $\epsilon\gamma_{min}$, de part et d'autre d'un point de changement de pente, pour avoir des consignes de vol identifiables ;
- une distance minimum entre deux sommets déterminants $S_i$ et $S_{i+1}$ pour mener une nouvelle recherche de sommet déterminant $S_{i+2}$.

Les contraintes "avion" sont essentiellement les pentes maximales à "cabrer" : $\gamma_{max}$, et "à piquer" : $\gamma_{min}$ que peut subir l'avion.

Dans le but de simplifier la description du procédé de pilotage à basse altitude, objet de l'invention, trois cas de figures sont envisagés et détaillés :

Cas 1 : le segment de navigation si est un segment court, typiquement de longueur inférieure à $2D_{minseg}$.

Cas 2 : le segment de navigation $s_i$ est un segment moyen avec au plus une cassure de pente, soit une distance de segment $D_{segment}$ telle que :

$$2D_{minseg} \leq D_{segment} \leq 3D_{minseg}$$

Cas 3 : le segment de navigation $s_i$ est un segment long, avec plus d'une cassure de pente, soit typiquement une distance de segment $D_{segment} \geq 3D_{minseg}$.

## Cas 1 : Segment de navigation si court

Les segments de navigation présentent la caractéristique d'être parcourus avec une pente constante que l'on cherche à optimiser selon le procédé de l'invention.

Pour cela, on recherche le sommet déterminant $S_{i1}$ qui consiste à identifier en partant de l'altitude $Z_{io}$ de l'avion en début de segment, la pente $\gamma_{i1}$ permettant de tangenter le relief rehaussé de la hauteur de garde HG.

Pour mener à bien cette recherche, on peut utiliser l'algorithme de recherche suivant :

- on initialise $\gamma_{i1}$ à $-\infty$
- en chaque point $P_{ij}$ du segment $s_i + t_i$ : on calcule $\gamma_{ij}$
   si $\gamma_{ij} > \gamma_{i1}$ on sauvegarde $Y_{i1}$ ($\gamma_{i1} = \gamma_{ij}$)
- on vérifie que la contrainte de changement de pente maximum est respectée à partir de la pente $\gamma_{io}$ en début de segment à l'altitude $Z_{io}$ soit $|\gamma_{i1} - \gamma_{io}| > |\Delta\gamma_{max}|$ alors $\gamma_{i1} = \gamma_{io} + \Delta\gamma_{max}$
- on vérifie également que la pente ainsi calculée est encadrée par les pentes minimum et maximum :
   si $\gamma_{i1} < \gamma_{min}$ alors $\gamma_{i1} = Ymin$
   si $\gamma_{i1} > \gamma_{max}$ alors $\gamma_{i1} = Ymax$

on est alors en mesure, sur un segment court, de déterminer une consigne de pente $\gamma_{i1}$ correspondant à la droite que doit suivre l'avion entre les deux buts fixés $B_i$ et $B_{i+1}$.

## Cas 2 : Segment de navigation $s_i$ moyen

Dans un premier temps, on recherche le sommet déterminant $S_{i1}$ de la même manière que dans le cas d'un segment court.

On obtient ainsi selon le même type d'algorithme en vérifiant que toutes les contraintes sont bien respectées, sur l'ensemble du segment, un premier sommet déterminant $S_{i1}$ et une pente $\gamma_{i1}$ entre le début et la fin du segment.

Plusieurs cas de figures peuvent alors se présenter :

1) le sommet déterminant $S_{i1}$ est situé très proche de l'extrémité du segment $s_i$ ou du segment + talon $S_i+t_i$, soit à une distance inférieure à $D_{minseg}$, n'est donc pas possible de changer de pente entre le point $S_{i1}$ et la fin du segment considéré et l'on se trouve alors dans un cas de figure où le profil de vol est très peu optimisé.

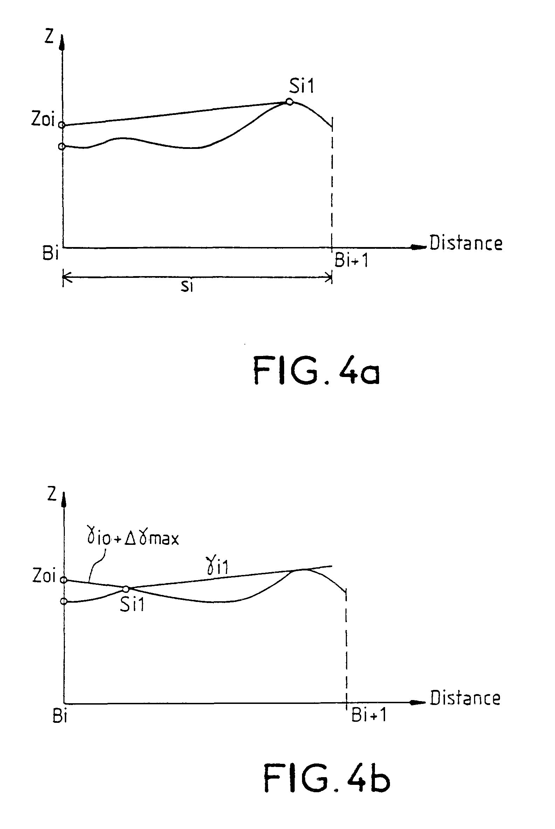

On préfère dans ce cas, chercher à descendre avec la pente la plus forte possible en début de segment, et ensuite chercher à rejoindre la fin du segment avec une pente "tangente" de type celle décrite précédemment dans le cas d'un segment court. Les figures 4a et 4b mettent en évidence le déplacement du premier sommet déterminant entre les points $Z_{io}$ et $S_{i1}$ on a une droite de pente telle qu'elle respecte la contrainte de changement de pente maximum $\Delta\gamma_{max}$ de part et d'autre d'un point de cassure, en l'occurrence le point $Z_{io}$ correspondant à la position de l'avion en début de segment ; la relation suivante doit ainsi être vérifiée, à savoir $|\gamma_{i1} - \gamma_{io}| > |\Delta\gamma_{max}|$, dans ce cas $\gamma_{i1} = \gamma_{io} + \Delta\gamma_{max}$ sinon $\gamma_{i1} = \gamma_{min}$

$\gamma_{io}$ étant la pente de la trajectoire de l'avion en fin de segment précédent $s_{i-1}$ en considérant donc que $\gamma_{i-1,n} = \gamma_{i,o}$.

2) le sommet déterminant $S_{i1}$ est situé très proche du début du segment $s_i$, soit à une distance inférieure à $D_{minseg}$, on ne remet pas en cause la posi-

tion $S_{i1}$ tout en respectant les contraintes "avion".

Dans tous les cas de figures lorsque la distance entre l'une des extrémités et le point $S_{i1}$ est supérieure à $2D_{minseg}$, on procède à la recherche d'un autre sommet déterminant dans ladite distance.

Ainsi, par exemple dans le cas où $d_{Si1,fin} \geq 2d_{minseg}$

si $d_{Si1,fin}$ correspond à la distance entre le sommet déterminant $S_{i1}$ et la fin du segment si complété du talon $t_i$, on est amené à rechercher un second sommet déterminant $S_{i2}$ à partir du point $S_{i1}$. On peut utiliser le même algorithme que celui décrit dans le cas du segment court, pour définir la pente qui tangente le relief entre les points $S_{i1}$ et $S_{i2}$.

Si le point $S_{i2}$ ainsi déterminé est très proche du point $S_{i1}$ à savoir $d_{Si1,Si2} < d_{minseg}$ on est amené à modifier le point $S_{i1}$ en prolongeant la droite de pente $\gamma_{i1}$ sur une distance égale à $d_{minseg}$. A partir de ce nouveau point $S_{i1}$, on recherche $S_{i2}$ et la pente $\gamma_{i2}$ qui tangente le relief à partir du nouveau point $S_{i1}$.

Cas 3 : segment de navigation $s_i$ long

On définit un segment $s_i$ comme long, s'il comprend au moins deux cassures de pentes, et donc possède une distance de segment

$$D_{segment} \geq 3D_{min,seg}$$

Le principe d'élaboration du profil vertical est le suivant :

- on effectue la recherche d'un sommet déterminant $S_{i1}$ sur l'ensemble du segment, de manière analogue à celle décrite dans le cas d'un segment court ;
- on effectue la recherche d'un sommet déterminant $S_{i2}$ avant $S_{i1}$ si la distance entre le début de segment et $S_{i1}$ est suffisante, soit $d_{Bi,Si1} > 2d_{minseg}$ si cette condition est vérifiée, on obtient un sommet $S_{i2}$ que vérifie les contraintes :

$$d_{Bi,Si2} \geq d_{minseg} \text{ et } d_{Si2Si1} \geq d_{minseg}$$

comme l'illustre la figure 5 ;
- ayant déterminé le sommet déterminant $S_{i2}$ et donc la pente $\gamma_{i2}$, on en déduit la pente $\gamma'_{i2}$ entre les points $S_{i2}$ et $S_{i1}$ ;
- on effectue également la recherche d'un sommet déterminant $S_{i3}$ après $S_{i1}$, si $d_{Si1,fin} \geq 2d_{minseg}$ comme cela a été décrit dans le cas d'un segment moyen. Le sommet déterminant $S_{i3}$ vérifie les relations :

$$d_{Bi,Si2} \geq d_{minseg} \text{ et } d_{Si3,fin} \geq d_{minseg}$$

- ayant déterminé $S_{i3}$ et donc la pente $\gamma_{i3}$ entre les points $S_{i1}$ et $S_{i3}$, on peut en déduire la pente $\gamma'_{i3}$ entre le point $S_{i3}$ et la fin du segment ;
- on procède de manière itérative.

Si le segment $s_i$ le permet, on répète le processus précédent pour déterminer des sommets déterminants intermédiaires entre les sous-segments préalablement définis à savoir entre le début du segment et le point $S_{i2}$, entre les points $S_{i2}$ et $S_{i1}$, entre les points $S_{i1}$ et $S_{i3}$, entre le point $S_{i3}$ et la fin du segment et ce jusqu'à atteindre la contrainte sur $D_{minseg}$ entre deux sommets déterminants.

Le procédé de détermination de sommets déterminants et donc de pentes tangentant le relief à survoler est conduit pour chacun des segments de navigation $s_i$.

**Revendications**

1. Procédé de pilotage d'un aéronef en vol à basse altitude comprenant les étapes suivantes :

   - la détermination par le pilote de l'aéronef d'une série de i<sup>ème</sup> buts ($B_i$) sur un écran cartographique, de manière à définir un plan de vol découpé en une série de i<sup>ème</sup> segments ($s_i$), chaque i<sup>ème</sup> segment ($s_i$) étant défini entre un i<sup>ème</sup> but ($B_i$) et un i+1<sup>ème</sup> but ($B_{i+1}$) ;
   - la détermination par un calculateur (C) dans l'aéronef d'une série de i<sup>ème</sup> trajectoires horizontales ($TH_i$) le long des i<sup>ème</sup> segments ($s_i$) ;
   - la détermination du profil de terrain à survoler, par le calculateur (C), ledit profil de terrain étant défini à partir d'une série de j i<sup>ème</sup> points les plus hauts ($P_{ij}$) situés sur une i<sup>ème</sup> trajectoire ($TH_i$) entre un i<sup>ème</sup> but ($B_i$) et un i+1<sup>ème</sup> but ($B_{i+1}$) ;
   - la détermination d'une série de k<sup>ème</sup> droites dont les pentes ($\Lambda_{ik}$) tangentent le terrain, lesdites droites étant définies respectivement entre l'altitude de l'aéronef positionné en début de i<sup>ème</sup> segment et un premier sommet déterminant, ---, entre un k<sup>ème</sup> sommet déterminant et un k+1<sup>ème</sup> sommet déterminant, ---, entre le n<sup>ème</sup> sommet déterminant et l'altitude de l'aéronef visée au voisinage de la fin du i<sup>ème</sup> segment, les k i<sup>ème</sup> sommets déterminants ($S'_{ik}$) étant définis parmi j i<sup>ème</sup> plus hauts points ($P_{ij}$), et lesdites droites définissant les consignes de vol en trajectoire verticale.

2. Procédé de pilotage d'un aéronef en vol à basse altitude selon la revendication 1, caractérisé en ce qu'il comprend :

   - la détermination d'un premier i<sup>ème</sup> sommet déterminant ($S_{i1}$) sur l'ensemble du i<sup>ème</sup> segment

de navigation ($s_i$) donnant une première pente ($\gamma_{i1}$) tangentant le relief du $i^{ème}$ segment ($s_i$);

- si la distance entre le début du $i^{ème}$ segment ($B_i$) et le premier $i^{ème}$ sommet déterminant ($S_{i1}$) est supérieure au double de la distance minimale séparant deux sommets déterminants ($2d_{minseg}$), la détermination d'un second $i^{ème}$ sommet déterminant ($S_{i2}$), définissant une seconde droite de pente ($\gamma_{i2}$), entre le début du segment et le premier $i^{ème}$ sommet déterminant ($S_{i1}$) et une droite de pente ($\gamma'_{i2}$) entre les $i^{ème}$ premier sommet déterminant ($S_{i1}$) et la fin du segment ;

- si la distance entre le premier $i^{ème}$ sommet déterminant ($S_{i1}$) et la fin de segment est supérieure au double de la distance minimale séparant deux sommets déterminants ($2d_{minseg}$), la détermination d'un troisième $i^{ème}$ sommet déterminant ($S_{i3}$), définissant deux pentes ($\gamma_{i3}$) et ($\gamma'_{i3}$) tangentant le relief de part et d'autre du troisième $i^{ème}$ sommet déterminant ($S_{i3}$);

- l'itération de la recherche de sommets déterminants dans chaque sous-segment nouvellement définis, jusqu'à atteindre la distance minimale séparant deux sommets déterminants ($d_{minseg}$) entre deux sommets déterminants consécutifs.

3. Procédé de pilotage d'un aéronef en vol à basse altitude selon l'une des revendications 1 ou 2, caractérisé en ce que la détermination d'un sommet déterminant comprend la vérification des contraintes suivantes :

- le changement de pente de part et d'autre d'un sommet déterminant est inférieur à une valeur standard ($\Delta\gamma_{max}$) définie pour tout plan de vol ;
- les k pentes des droites tangentant le $i^{ème}$ segment ($S_i$) sont encadrées par la pente maximale de "piquage" de l'aéronef ($\gamma$ min) et la pente maximale de "cabrage" de l'aéronef ($\gamma$ max).

4. Procédé de pilotage d'un aéronef en vol à basse altitude selon l'une des revendications 1 à 3, caractérisé en ce que le pilote détermine les buts ($B_i$), à partir d'une manette de jeu, type "joystick"

5. Procédé de pilotage d'un aéronef en vol à basse altitude selon l'une des revendications 1 à 3, caractérisé en ce que le pilote détermine les $i^{ème}$ buts ($B_i$) par action sur un écran tactile.

6. Procédé de pilotage d'un aéronef en vol à basse altitude selon l'une des revendications 1 à 3, caractérisé en ce que le pilote détermine les $i^{ème}$ buts ($B_i$) par commande vocale.

7. Procédé d'aide au pilotage d'un aéronef en vol à basse altitude selon l'une des revendications 1 à 6, caractérisé en ce que les consignes de vol en trajectoire verticale sont présentées au pilote ;

- d'une part sous forme de consignes de vol générales, sur une fenêtre de l'écran cartographique, montrant l'ensemble des droites ($Z_{oi}S'_{i1}$) définies entre l'altitude de l'aéronef positionné en début de $i^{ème}$ segment ($S_i$) et le premier sommet déterminant du $i^{ème}$ segment ($S'_{i1}$);
- d'autre part sous forme de consignes de vol ponctuelles, sur un viseur tête haute.

## Claims

1. Method of piloting an aircraft in low-altitude flight, comprising the following steps:

- the determining, by the pilot of the aircraft, of a series of $i^{th}$ goals ($B_i$) on a cartographic screen, so as to define a flight plan subdivided into a series of $i^{th}$ segments ($s_i$), each $i^{th}$ segment ($s_i$) being defined between an $i^{th}$ goal ($B_i$) and an $i+1^{th}$ goal ($B_{i+1}$) ;
- the determining, by a computer (C) in the aircraft, of a series of $i^{th}$ horizontal paths ($TH_i$) along the $i^{th}$ segments ($s_i$);
- the determining, by the computer (C), of the terrain profile to be overflown, the said terrain profile being defined on the basis of a series of $j^{th}$ highest points ($P_{ij}$) situated on an $i^{th}$ path ($TH_i$) between an $i^{th}$ goal ($B_i$) and an $i+1^{th}$ goal ($B_{i+1}$);
- the determining of a series of $k^{th}$ straight lines whose slopes ($\Lambda_{ik}$) are tangent to the terrain, the said straight lines being defined respectively between the altitude of the aircraft positioned at the start of the $i^{th}$ segment and a first determinant peak, ---, between a $k^{th}$ determinant peak and a $k+1^{th}$ determinant peak, ---, between the $n^{th}$ determinant peak and the aircraft altitude sought in the vicinity of the end of the $i^{th}$ segment, the $k$ $i^{th}$ determinant peaks ($S'_{ik}$) being defined among $j$ $i^{th}$ highest points ($P_{ij}$), and the said straight lines defining the vertical path flight instructions.

2. Method of piloting an aircraft in low-altitude flight according to Claim 1, characterized in that it comprises:

- the determining of a first $i^{th}$ determinant peak ($S_{i1}$) over the whole of the $i^{th}$ navigation segment ($s_i$) giving a first slope ($\gamma_{i1}$) tangent to the relief of the $i^{th}$ segment ($s_i$);
- if the distance between the start of the $i^{th}$ segment ($B_i$) and the first $i^{th}$ determinant peak ($S_{i1}$) is greater than twice the minimum distance separating two determinant peaks ($2d_{minseg}$), the determining of a second $i^{th}$ determinant peak ($S_{i2}$), defining a second straight line of slope ($\gamma_{i2}$), between the start of the segment and the first $i^{th}$ determining segment ($S_{i1}$) and a straight line of slope ($\gamma'_{i2}$) between the $i^{th}$ first determinant peak ($S_{i1}$) and the end of the segment;

- if the distance between the first $i^{th}$ determinant peak ($S_{i1}$) and the end of segment is greater than twice the minimum distance separating two determinant peaks ($2d_{minseg}$), the determining of a third $i^{th}$ determinant peak ($S_{i3}$), defining two slopes ($\gamma_{i3}$) and ($\gamma_{i3}$) tangent to the relief on either side of the third $i^{th}$ determinant peak ($S_{i3}$) ;

- the iterating of the search for determinant peaks in each newly defined subsegment, until the minimum distance separating two determinant peaks ($d_{minseg}$) is reached between two consecutive determinant peaks.

3. Method of piloting an aircraft in low-altitude flight according to one of Claims 1 or 2, characterized in that the determining of a determinant peak comprises the verifying of the following constraints:

- the change of slope on either side of a determinant peak is less than a standard value ($\Delta\gamma_{max}$) defined for any flight plan;

- the k slopes of the straight lines tangent to the $i^{th}$ segment ($S_i$) are flanked by the maximum "nose down" slope of the aircraft ($\gamma_{min}$) and the maximum "nose-up" slope of the aircraft ($\gamma$ max).

4. Method of piloting an aircraft in low-altitude flight according to one of Claims 1 to 3, characterized in that the pilot determines the goals ($B_i$) on the basis of a control stick of the "joystick" type.

5. Method of piloting an aircraft in low-altitude flight according to one of Claims 1 to 3, characterized in that the pilot determines the $i^{th}$ goals ($B_i$) by action on a touch screen.

6. Method of piloting an aircraft in low-altitude flight according to one of Claims 1 to 3, characterized in that the pilot determines the $i^{th}$ goals ($B_i$) by voice command.

7. Method of assisting the piloting of an aircraft in low-altitude flight according to one of Claims 1 to 6, characterized in that the vertical path flight instructions are presented to the pilot;

- on the one hand in the form of general flight instructions, on a window of the cartographic screen, showing all the straight lines ($Z_{0i}S'_{i1}$)

defined between the altitude of the aircraft positioned at the start of the $i^{th}$ segment ($S_i$) and the first determinant peak of the $i^{th}$ segment ($S'_{i1}$);

- on the other hand in the form of ad-hoc flight instructions on a head-up visor.

**Patentansprüche**

1. Verfahren zur Fluglagenregelung eines auf geringer Höhe fliegenden Luftfahrzeugs, das die folgenden Schritte umfaßt:

- Bestimmung durch den Piloten des Luftfahrzeugs einer Reihe i-ter Ziele ($B_i$) auf einem kartographischen Schirm in der Weise, daß eine in eine Reihe i-ter Segmente ($s_i$) zerschnittene Flugebene definiert wird, wobei jedes *i*-te Segment ($s_i$) zwischen einem i-ten Ziel ($B_i$) und einem (i + 1)-ten Ziel ($B_{i+1}$) definiert ist;

- Bestimmung durch einen Rechner (C) im Luftfahrzeug einer Reihe i-ter horizontaler Bahnen ($TH_i$) längs der i-ten Segmente ($s_i$);

- Bestimmung des Profils des zu überfliegenden Geländes durch den Rechner (C), wobei das Geländeprofil anhand einer Reihe der j höchsten i-ten Punkte ($P_{ij}$), die sich auf einer i-ten Bahn ($TH_i$) zwischen einem i-ten Ziel ($B_i$) und einem (i + 1)-ten Ziel ($B_{i+1}$) befinden, definiert ist;

- Bestimmung einer Reihe k-ter Geraden, deren Steigungen ($\Lambda_{ik}$) das Gelände tangential berühren, wobei die Geraden zwischen der Höhe des am Anfang des i-ten Segments positionierten Luftfahrzeugs und einem ersten Bestimmungsscheitel bzw. zwischen einem k-ten Bestimmungsscheitel und einem (k + 1)-ten Bestimmungsscheitel bzw. zwischen dem n-ten Bestimmungsscheitel und der Höhe des Luftfahrzeugs, die am Ende des i-ten Segments anvisiert wird, definiert sind, wobei die k i-ten Bestimmungsscheitel ($S'_{ik}$) aus den j höchsten i-ten Punkten ($P_{ij}$) definiert werden und wobei die Geraden die Flug-Sollwerte auf der vertikalen Bahn definieren.

2. Verfahren zur Fluglagenregelung eines auf geringer Höhe fliegenden Luftfahrzeugs nach Anspruch 1, dadurch gekennzeichnet, daß es umfaßt:

- Bestimmung eines ersten i-ten Bestimmungsscheitels ($S_{i1}$) in der Gesamtheit des i-ten Navigationssegments ($s_i$), was eine erste Steigung ($\gamma_{i1}$) ergibt, die das Relief des i-ten Segments ($s_i$) tangential berührt;

- wenn der Abstand zwischen dem Anfang des i-ten Segments ($B_i$) und dem ersten i-ten Be-

stimmungsscheitel ($S_{i1}$) größer ist als der doppelte minimale Abstand ($2d_{minseg}$), der zwei Bestimmungsscheitel trennt, Bestimmung eines zweiten i-ten Bestimmungsscheitels ($S_{i2}$), der eine zweite Gerade mit Steigung ($\gamma_{i2}$) zwischen dem Anfang des Segments und dem ersten i-ten Bestimmungsscheitel ($S_{i1}$) sowie eine Gerade mit Steigung ($\gamma'_{i2}$) zwischen dem i-ten ersten Bestimmungsscheitel ($S_{i1}$) und dem Segmentende definiert;

- wenn der Abstand zwischen dem ersten i-ten Bestimmungsscheitel ($S_{i1}$) und dem Ende des Segments größer ist als der doppelte minimale Abstand ($2d_{minseg}$), der zwei Bestimmungsscheitel trennt, Bestimmung eines dritten i-ten Bestimmungsscheitels ($S_{i3}$), der zwei Steigungen ($\gamma_{i3}$) und ($\gamma'_{i3}$) definiert, die das Relief beiderseits des dritten i-ten Bestimmungsscheitels ($S_{i3}$) tangential berühren;

- Iteration der Suche der Bestimmungsscheitel in jedem neu definierten Untersegment, bis zwischen zwei aufeinanderfolgenden Bestimmungsscheiteln der minimale Abstand ($d_{minseg}$), der zwei Bestimmungsscheitel trennt, erreicht ist.

3. Verfahren zur Fluglagenregelung eines auf geringer Höhe fliegenden Luftfahrzeugs nach einem der Ansprüche 1 oder 2, dadurch gekennzeichnet, daß die Bestimmung eines Bestimmungsscheitels die Verifikation der folgenden Bedingungen umfaßt:

- die Änderung der Steigung beiderseits eines Bestimmungsscheitels ist kleiner als ein für die gesamte Flugebene definierter Standardwert ($\Delta\gamma_{max}$);

- die k Steigungen der das i-te Segmente ($S_i$) tangential berührenden Geraden liegen zwischen der maximalen "Sturzflug"-Steigung des Luftfahrzeugs ($\gamma_{min}$) und der maximalen "Hochzieh"-Steigung des Luftfahrzeugs ($\gamma_{max}$).

4. Verfahren zur Fluglagenregelung eines auf geringer Höhe fliegenden Luftfahrzeugs nach einem der Ansprüche 1 bis 3, dadurch gekennzeichnet, daß der Pilot die Ziele ($B_i$) anhand eines Spiele-Bedienungshebels des "Joystick"-Typs bestimmt.

5. Verfahren zur Fluglagenregelung eines auf geringer Höhe fliegenden Luftfahrzeugs nach einem der Ansprüche 1 bis 3, dadurch gekennzeichnet, daß der Pilot die i-ten Ziele ($B_i$) durch Einwirkung auf einen Tastschirm bestimmt.

6. Verfahren zur Fluglagenregelung eines auf geringer Höhe fliegenden Luftfahrzeugs nach einem der Ansprüche 1 bis 3, dadurch gekennzeichnet, daß der Pilot die i-ten Ziele ($B_i$) durch Sprachsteuerung bestimmt.

7. Verfahren zur Unterstützung der Fluglagenregelung eines auf geringer Höhe fliegenden Luftfahrzeugs nach einem der Ansprüche 1 bis 6, dadurch gekennzeichnet, daß die Flug-Sollwerte auf der vertikalen Bahn dem Piloten

- einerseits in Form von allgemeinen Flug-Sollwerten in einem Fenster des Kartographieschirms, das die Gesamtheit der Geraden ($Z_{oi}S'_{i1}$) zeigt, die zwischen der Höhe des am Anfang des i-ten Segments ($S_i$) positionierten Luftfahrzeugs und dem ersten Bestimmungsscheitel des i-ten Segments ($S'_{i1}$) definiert sind; und

- andererseits in Form von punktförmigen Flug-Sollwerten auf einem Überkopf-Visier

präsentiert werden.

FIG.1

FIG.2

FIG.3

FIG.5

FIG. 4a

FIG. 4b